# EUROPEAN PATENT APPLICATION

(11) **EP 0 588 671 A1**
(43) Date of publication of application: **23.03.1994**
(21) Application number: 93307436.1
(22) Date of filing: 20.09.1993
(51) Int. Cl.: F16B 19/10, F16B 37/06

(54) **Plastic fastener**

(30) Priority: 18.09.1992 JP 65270/92 U
(71) Applicant: EMHART INC., Newark, Delaware 19711 (US)
(72) Inventor: Iwase, Motomi, Noda, Shinjyo City (JP)
(74) Representative: Randall, John Walter

(57) **Abstract**

A plastic fastener (1) with a plastic rivet portion (4) having a head (2) and a shank (3) and a plastic setting member (7) having a head (5) for expanding the shank (3) diametrically and a stem (6) extending from the head (5). The setting member (7) is assembled with the rivet portion (4) with the head (5) of the setting member (7) positioned adjacent to the shank (3) of the rivet portion (4) and the stem (6) of the setting member (7) passing through the head (2) of the rivet portion (4) and extending outwardly. Tool engagement means is provided on the outwardly extending stem (6). When the stem (6) is pulled, the head (5) of the setting member (7) is drawn into and expands the shank (3) diametrically and the portion of stem (6) projecting from the head (2) of the rivet portion (4) is broken and removed. This allows the head (5) of the setting member (7) to be pulled up into the shank (3) of the rivet portion (4) forcibly to maintain the clamping force to draw the workpieces together. Removal of the fastener (1) may be accomplished by pushing the head (5) of the setting portion (7) downwards out of engagement with the shank (3) of the rivet portion (4). In the setting member (7) the portion of the stem (6) adjoining the head (5) is provided with an internally threaded portion comprising a hollow portion and internal threads formed on the inside wall of the hollow portion. Thus, when the fastener (1) is set and the stem (6) broken off a screw can be screwed into the internally threaded portion.

## Description

The present invention relates to a plastic fastener for use in attaching an ornamental member or the like to a vehicle body panel or the like, and particularly one which has a flange and a leg portion and connects two attachment members together when a flange comes in surface-contact with one of the two attachment members and a large diameter portion of the leg portion passing through the two attachment members comes in contact with the other attachment member.

There is a large number of known plastic fasteners for use in attaching an attachment member, such as an ornamental member, to a workpiece, such as a vehicle body panel. A typical such fastener has a head flange and a shank and connects the members to the workpiece when the head flange comes in surface-contact with one of the members and a large diameter portion passing through the two members is brought into contact with the other member. A plastic fastener having a head and a shank comprising anchor legs is of this type. However, such fasteners in general can exert only a small clamping force and the work pieces and also cannot be removed easily, i.e. are not suitable for reuse. The allowable range of workpiece thicknesses is limited.

Another common fastener has a head and a shank portion which can be expand diametrically when a screw member is screwed through the head into the shank. This fastener has the advantage that it is suitable for reuse as it can be removed by retracting the screw member. If the screw member cannot be rotated or the fastener rotates together with the screw member when the latter is rotated, however, it is not possible to remove the fastener. Although the clamping force is greater than that of the above-mentioned anchor legged fastener, it is often not large enough to draw the workpieces together.

Accordingly, the present invention aims to provide a plastic fastener which can provide an effective clamping force to draw workpieces together, which is capable of dealing with different thicknesses of workpiece and which can easily be reused.

The present invention provides a plastic fastener comprising a head and a shank adapted for use in connecting two workpieces with the head in engagement with one workpiece and the shank expanded into engagement with the other workpiece characterized in that the fastener comprises a plastic rivet portion having a head and a shank and a plastic setting member having a head for expanding the shank of the rivet portion diametrically and a stem extending from the head, and the setting member is assembled with the rivet portion with the head of the setting member adjacent to the shank of the rivet portion and the stem of the setting member passing through the head of the rivet portion and extending outward, tool engagement means formed on the stem of the setting member shank the arrangement being such that the head of the setting member can be drawn into and expand the shank diametrically to set the rivet portion when the stem is pulled that the portion of stem projecting from the head can be broken and removed when the stem is pulled.

There now follows a description of two fasteners embodying the invention, to be read with reference to the accompanying drawings.

In the drawings
Figure 1 is a view partially in section of a first fastener embodying the invention;
Figure 2 is a plan view of a rivet portion of the first fastener;
Figure 3 is a side view of the rivet portion;
Figure 4 is a bottom view of the rivet portion
Figure 5 is a side view of the rivet portion;
Figure 6 is a view in section taken along the line A - A of Figure 3.
Figure 7 is a view in section taken along the line B - B of Figure 3;
Figure 8 is a view in section taken along the line C - C of figure 2;
Figure 9 is a plan view of a setting member;
Figure 10 is a front view of the setting member in elevation;
Figure 11 is a bottom view of the setting member;
Figure 12 is a left side view of the setting member;
Figure 13 is a right side view of the second clip member;
Figure 14 is a view in section taken along the line D - D of Figure 10;
Figure 15 is a view in section taken along the line E - E of Figure 10.
Figure 16 is a view in section taken along the line F - F of Figure 10;
Figure 17 is a view in section taken along the line G - G of Figure 10.
Figure 18 is a view in section taken along the line H - H of Figure 10;
Figure 19 is an enlarged view of the portion marked by the circle I of Figure 10;
Figure 20 shows the state prior to connecting two work pieces together with the fastener of Figure 1 by the use of a setting tool;
Figure 21 is a drawing showing the fastener after setting;
Figure 22 is a drawing illustrating release of the set fastener;
Figure 23 is a front view, partially in section, of a second fastener embodying the invention;
Figure 24 shows the second fastener in a state prior to connecting two workpieces together by the use of a setting tool.

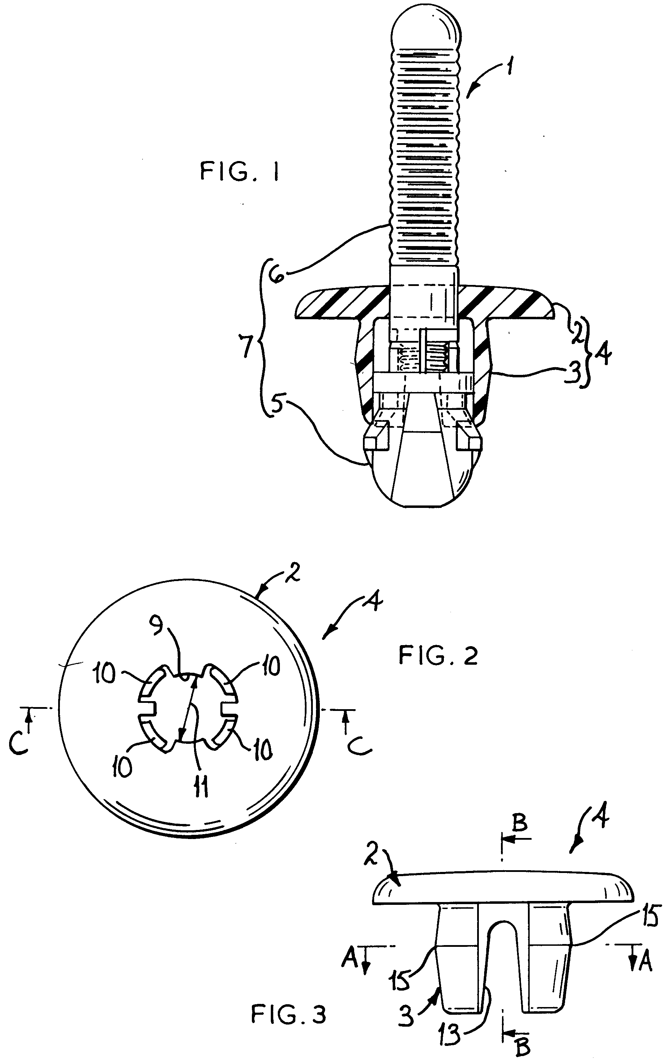

As shown in Figure 1, a plastic fastener 1 comprises a plastic rivet portion 4 having a head 2 and a shank 3, and a plastic setting member 7 having a head 5 for diametrically expanding the shank 3 of the rivet portion 4 and a stem 6 extending from the head 5.

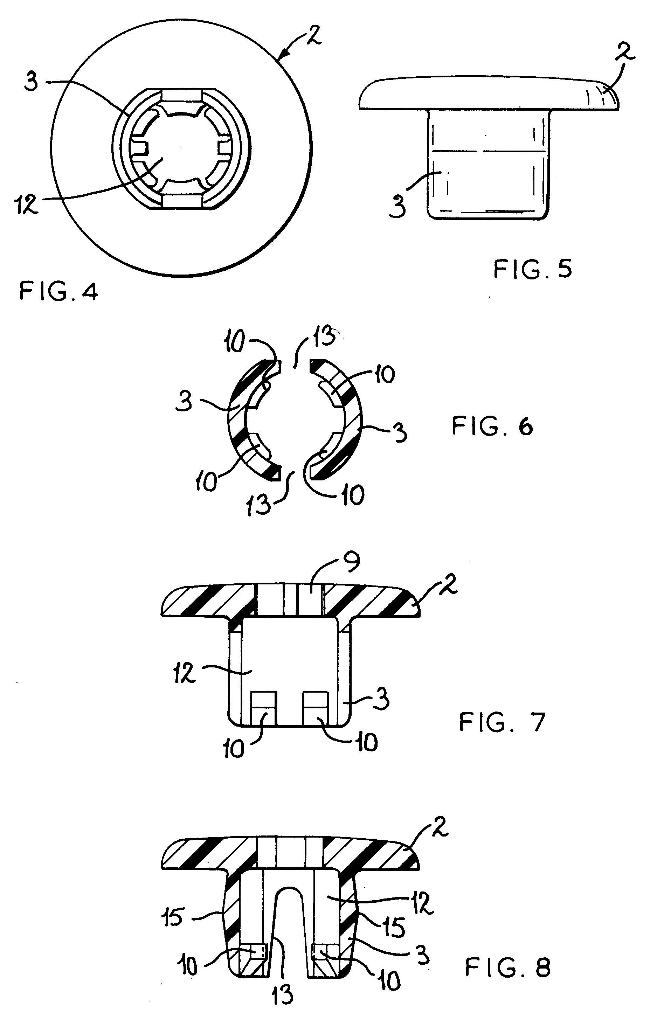

The rivet portion 4 will now be described with reference to Figures 2 to 8. The head 2 of the rivet portion 4 is circular and has a bore 9 to receive the stem of the setting member 7. The bore 9 may be a simple circular bore. The shank 3 is formed with a head receiving bore 12 continued from the bore 9 to let the stem 6 of the setting member 7 pass and to receive the head 5. As shown in Figures 3 and 6, a pair of slits 13, 13 are provided and define a pair of legs which can bend both in opening and closing directions. On the inside walls of the shank 3, a number of ridges 10 are provided circumferentially defining a diameter 11 less than that of the bore 9 through which the stem 6 of the setting member may pass. The legs also comprise projections 15 protruding radially outwardly which allow for temporarily attachment of the fastener in a workpiece.

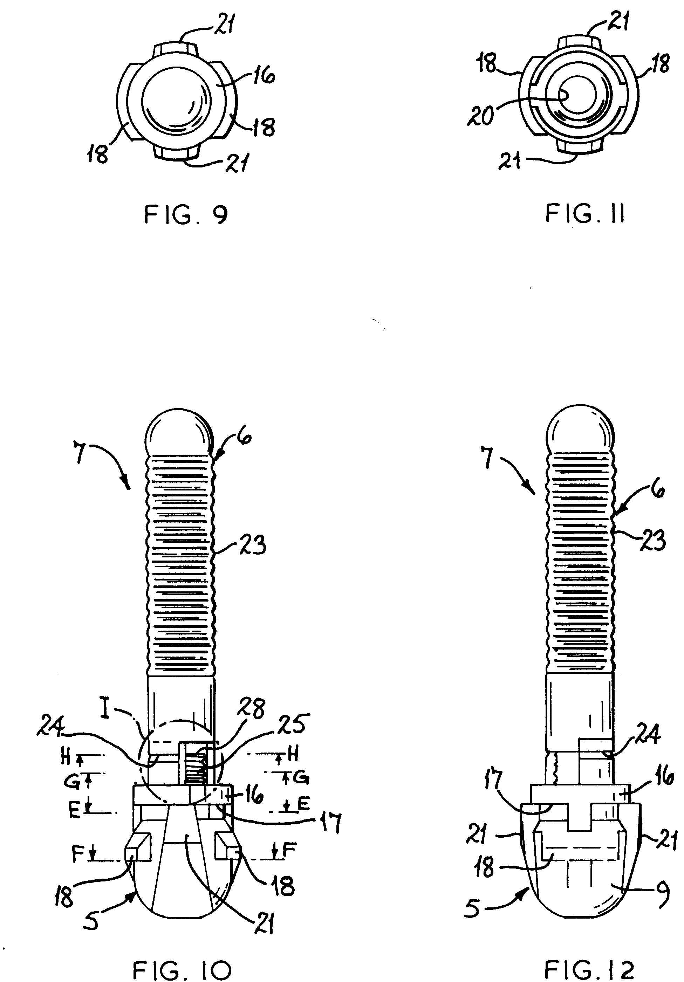

As shown in Figures 9 to 19, the setting member 7 comprises the head 5 for expanding the shank 3 of the rivet portion 4 and the stem 6 extending upwardly from the head 5. The head 5 has a substantially circular stopper 16 in a boundary area with the stem 6 of a size which prevents the head 5 from passing through the head 2 of the rivet portion. An under face 17 of the stopper 16 serves as a first engagement portion to engage with the ridges 10 of the shank 3 of the rivet portion 4. When the setting member 7 is assembled with the rivet portion 4, the face 17 engages the ridges 10, the head 5 adjacent to the shank 3, and the shank 6 of the setting member 7 passing through the head 2 and extending outwardly.

Two projections 18, 18 are formed circumferentially partially below the stopper 16 and in the middle of the head 5 heightwise. The portion between the projections 18 and the stopper 16 has a size that allows the face 17 to enter the head receiving bore 12 and to rest in engagement with the ridges 10 without expanding the shank 3 diametrically. When the projections 18 are drawn into the bore 12, the projections 18 expand the shank 3 in diameter. Bottom faces 19 of the projections 18 serve as second engagement portions and can also engage the ridges 10 of the shank 3 and when the setting member 7 is drawn into the rivet portion 4 so that the faces 19 engage the ridges 10 of the shank 3, the shank 3 is maintained in its expanded state as shown in Figure 21.

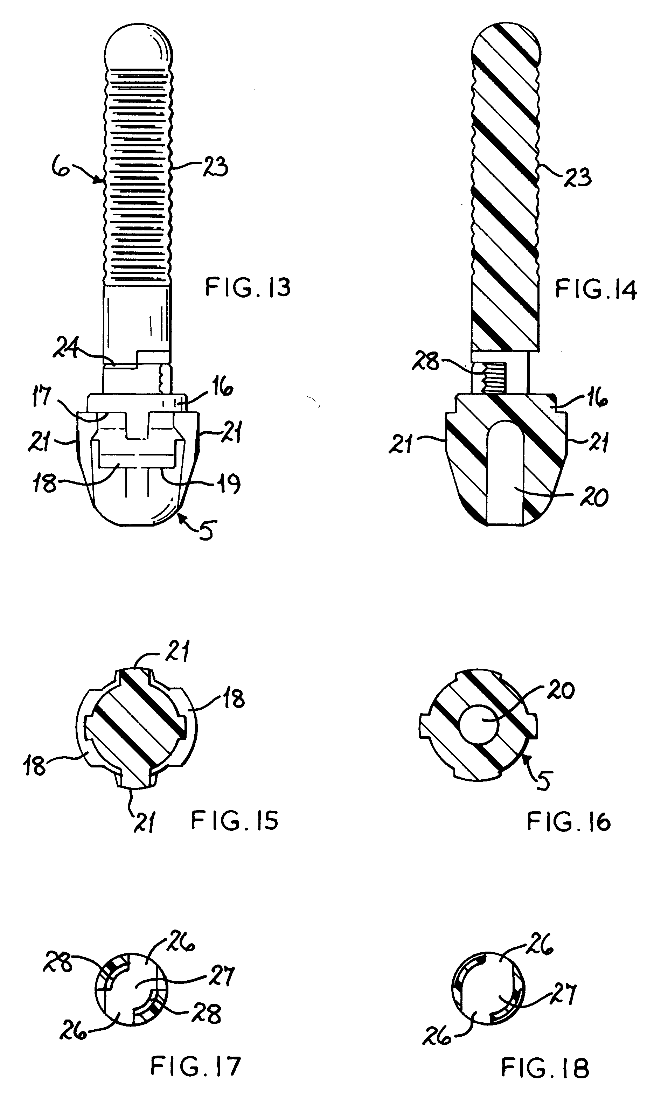

The lower end of the head 5 is tapered and rounded so that the head 5 of a fastener 1 can be inserted easily into a bore in a workpiece. As shown in Figure 14, a hollow 20 is formed in the center of the head 5 to prevent distortion of the head shape. Further, two ribs 21 are provided on the head 5, extending from the end upwardly between the projections 18. The ribs 21 serve as guides along the slits 13 of the rivet portion 4 properly to position the projections 18 of the head 5 with respect to the ridges 10 of the shank 3. In the permanently fixed state in which the faces 19 of the projections 18 engage the ridges 10, the ribs 21 restricted by the slits 13 of the shank prevent the head 5 from rotating.

The ribs 21 may be sloped gently in the circumferential direction so that they are usually restricted by the slits 13 of the shank but be forced past the slits 13 if the head 5 is rotated forcibly. In this case, upon rotating the head 5, the faces 19 move away from the ridges 10 and at the same time the ribs 21 push the ridges 10 radially outwardly to keep the diameter of the shank expanded and the faces 19 are disengaged from the ridges 10 and the head 5 may be moved downward to release the permanent fixing.

In an end portion extending through the head 2 of the rivet portion 4, the stem 6 of the setting member 7 is provided with circumferential grooves 23 as tool engagement means for extracting the stem 6. The circumferential grooves 23 define convexes and concaves in the longitudinal direction. When the shank 6 is drawn out, the head 5 moves into the shank 3 to expand the shank 3 diametrically. In a position which is spaced by the thickness of the head 2 from the stopper 16 of the head 5, the stem 6 is provided with a circumferential notch 24 at which the stem may break when the setting member 6 is withdrawn to set the fastener.

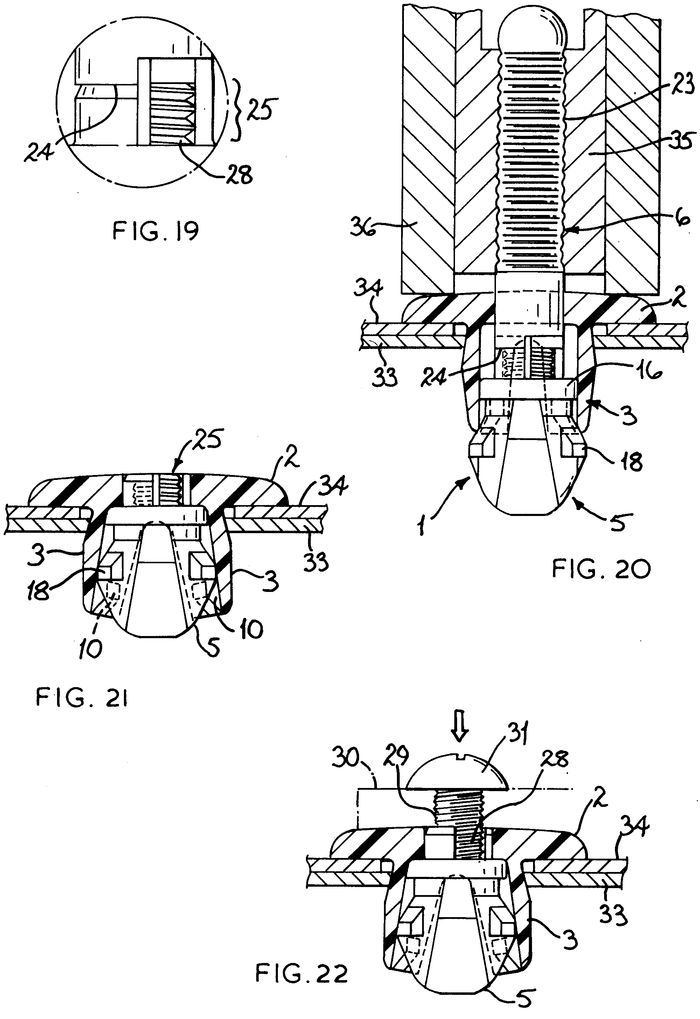

Between the notch 24 and the stopper 16 in the stem 6 of the setting member 7 is provided an internally threaded portion 25 having a pair of openings 26 facing each other diametrically (See Figures 17 and 18). The threaded portion 25 comprises a central bore 27 and internal threads 28. A screw 29 can be screwed into the portion 25 when the upper portion of the shank 6 is removed as shown in Figure 21, and may be used to secure another workpiece 30 (indicated by dotted lines in Figure 22) to the head 2 as shown in Figure 22. Apart from this the head of the screw can hit downwardly thus pushing the head 5 downward so as to release the fastener. In this case, a head 31 of the screw 29 comes into engagement with the head 2 and prevents the head 5 from dropping out. If the bore 27 is formed without internal threads 28 a self tapping screw can be inserted for the same purposes. It is also possible to release the fastener merely by forcing the head 5 downwards by use of an appropriate tool.

The procedure for securing a workpiece 34 such as an ornamental member 3 to a workpiece 32 such as a vehicle body panel by the use of the fastener 1 will now be described with reference to Figures 20 and 21. The fastener 1 initially has the setting members 7 positioned in the rivet portion 4 as shown in Figure 1. The fastener 1 is positioned in aligned holes in the workpieces with the head 2 in contact with the member 34 and the shank 3 and the head 5 passed through the holes of the two workpieces. Jaws 35 of a blind rivet setting tool firmly grip the circumferentially grooved portion 23 of the stem 6 with a nose piece 36 in surface-contact with the head 2. When the blind rivet setting tool is caused to operate, the jaws 35 are pulled up to pull the stem 6 and draw the head 5 into the shank 3 of the rivet portion 4 and the stopper 16 into abutment with the end face of the bore 9. The faces 19 of the projections 18 are engaged with the ridges 10 as the projections 18 expand the shank 3 outwardly so that the fastener is brought into the permanently fixed condition of Figure 21 securing the workpieces 33 and 34 together. At this time, the fastener 1 is so arranged that pulling of the stem 6 breaks the stem 6 at the notch 24. Thus, the portion of stem projecting from the head 2 and gripped by the jaws 35 is removed and the internally threaded portion 25 of the stem of the setting member 2 is left as shown in Figure 22. If a screw 29 is screwed into the internally threaded portion 25, a further workpiece 30 can be mounted on the head 2. Again, as previously described, pushing the screw 29 downwards will release the fastener 1.

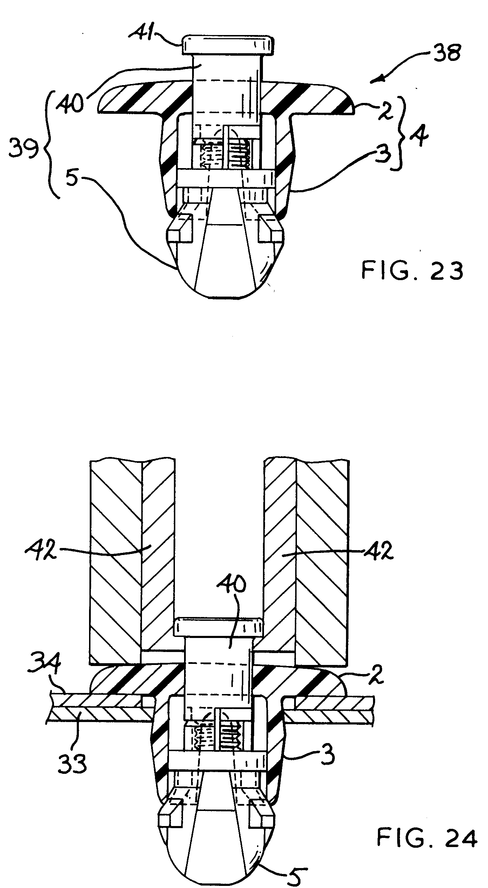

Figures 23 shows a second plastic fastener 38 embodying the invention. The fastener 38, comprises a rivet portion 4 identical with the one shown in Figures 2 to 8. A setting member 39 resembles that shown in Figures 9 to 19 except that it comprises a stem 40 having an end portion of different shape which will now be described, omitting explanation of the other portions. The end portion of the stem 40 comprises a head 41 which provides tool engagement means. As shown in Figure 24, the head 41 may be engaged with jaws 42 of a blind rivet setting tool to enable pulling of the stem 40. The set fastener is then as shown in Figure 21.

The plastic fastener according to the present invention comprises a plastic rivet portion having a head and a shank and a plastic setting member having a head for expanding the shank diametrically and a stem extending from the head. The setting member is assembled with the rivet portion with the head of the setting member positioned adjacent to the shank of the rivet portion and the stem of the setting member passing through the head of the rivet portion and extending outward. In the outwardly extending portion of the stem of the setting member, tool engagement means is provided for extracting the stem. It is so arranged that when the stem is pulled, the head of the setting member is drawn into and expands the shank diametrically and the portion of stem projecting from the head of the rivet portion is broken and removed. This allows the head of the setting member to be pulled up into the shank of the rivet portion forcibly to maintain the clamping force to draw the workpieces together at a high level, and enables the fastener to deal with workpieces of different thickness. Removal of the fastener may be accomplished easily by pushing the head of the setting portion downwards out of engagement with the shank of the rivet portion.

In the setting member of the fastener the portion of the stem adjoining the head is provided with an internally threaded portion comprising a hollow portion and internal threads formed on the inside wall of the hollow portion. Thus, when the fastener is set and the stem broken off a screw can be screwed into the internally threaded portion. This not only prevents the head of the setting members from dropping in a removal operation but also allows still another workpiece to be mounted on the fastener by the use of a screw.

## Claims

1. A plastic fastener comprising a head and a shank adapted for use in connecting two workpieces with the head in engagement with one work piece and the shank expanded into engagement with the other workpiece characterized in that the fastener comprises a plastic rivet portion having a head and a shank and a plastic setting member having a head for expanding the shank of the rivet portion diametrically and a stem extending from the head, and the setting member is assembled with the rivet portion with the head of the setting member adjacent to the shank of the rivet portion and the stem of the setting member passing through the head of the rivet portion and extending outward, tool engagement means formed on the stem of the setting member shank the arrangement being such that the head of the setting member can be drawn into and expand the shank diametrically to set the rivet portion when the stem is pulled that the portion of stem projecting from the head can be broken and removed when the stem is pulled.

2. A plastic fastener according to claim 1 wherein the stem of the setting member is provided adjacent its head with an internally threaded portion comprising a hollow portion and internal threads so that a screw can be screwed into the internally threaded portion when the portion of the stem projecting from the set rivet portion has been removed.
